# DEMANDE DE BREVET EUROPEEN

(11) **EP 1 227 622 A1**
(43) Date de publication de la demande: **31.07.2002**
(21) Numéro de dépôt: 01402566.2
(22) Date de dépôt: 04.10.2001
(51) Int. Cl.: H04L 12/44

(54) **Adapteur de terminal pour relier un terminal à un réseau local informatique capable d'identifier un type de terminal parmi plusieurs types**

(30) Priorité: 08.01.2001 FR 0100169
(71) Demandeur: ALCATEL, 75008 Paris (FR)
(72) Inventeur: Vergnaud, Gérard, 95130 Franconville (FR); Dortu, Giovanni, 95240 Cormeilles en Parisis (FR)
(74) Mandataire: Sciaux, Edmond

(57) **Abrégé**

L'invention concerne un adaptateur de terminal pour relier un terminal à un réseau local informatique capable d'identifier un type de terminal parmi plusieurs types en détectant la présence d'un circuit électronique particulier, dit d'identification, propre à un type, bien que ce terminal ne comprenne pas à l'origine, un tel circuit d'identification. Cet adaptateur comporte :
- des prises (P1, P2) pour insérer cet adaptateur entre deux tronçons (L1, L2) d'une liaison entre ce terminal (T) et le réseau (LAN) ;
- et un circuit d'identification (C1 ; R1) propre à un type de terminal et que ce réseau est capable de détecter ; ce circuit d'identification étant relié à au moins deux conducteurs du tronçon de liaison (L1) situé du côté du réseau.

Application aux terminaux téléphoniques reliés à un réseau local informatique.

## Description

La présente invention concerne un adaptateur de terminal pour relier un terminal à un réseau local informatique capable d'identifier un type de terminal parmi plusieurs types. Elle concerne notamment les terminaux aptes à être alimentés localement et à être téléalimentés par une liaison à un réseau local informatique, par exemple de type Ethernet. Classiquement, les terminaux connectés à un réseau local informatique (par exemple : ordinateurs personnels, imprimantes, etc ...) sont alimentés localement, par le secteur. Des cordons d'alimentation à 110 ou 220 Volts, indépendants des liaisons de données sont donc utilisées pour alimenter les terminaux. Cette solution augmente la difficulté de l'installation du réseau local :
- L'utilisation de deux cordons soulève des problèmes d'encombrement pouvant, en outre, limiter la liberté de mouvement des personnes.
- Elle crée des risques électriques.

Dans le cas d'un poste téléphonique, une alimentation locale par le secteur a en plus pour inconvénient de mettre le poste téléphonique hors service en cas de coupure de secteur, notamment en cas d'incendie ou catastrophe naturelle. C'est pourquoi les postes téléphoniques classiques sont téléalimentés par leur commutateur de rattachement, celui-ci comportant des accumulateurs de secours.

On commence à utiliser des terminaux téléphoniques reliés à un réseau local informatique. Il est donc souhaitable que certains terminaux reliés à un réseau local informatique soient téléalimentés, à travers la même liaison que celle utilisée pour émettre/recevoir des données. Une façon de transmettre un courant de téléalimentation consiste à utiliser deux des huit fils de la liaison : quatre autres de ces huit fils sont deux paires de fils utilisées respectivement pour transmettre et recevoir des données. Une autre façon, dite par circuit fantôme, consiste à relier les deux bornes d'un générateur d'alimentation respectivement aux points milieux d'un enroulement de transformateur relié à la paire de réception de données et d'un enroulement d'un autre transformateur relié à la paire d'émission de données, dans le dispositif de téléalimentation. Du côté du terminal, la tension d'alimentation est fournie respectivement par les points milieux d'un enroulement de transformateur relié à la paire de réception de données et d'un enroulement d'un autre transformateur relié à la paire d'émission de données.

Dans les deux cas, téléalimenter un terminal par le réseau local informatique a pour inconvénient que le dispositif de téléalimentation alimente de manière aveugle un terminal. Or la prise RJ45 située à l'extrémité de la liaison peut recevoir un terminal d'un type autre qu'un téléphone (par exemple un ordinateur personnel, une imprimante, etc...). Il y a un risque d'endommager les circuits électriques de ce terminal. En effet, la prise RJ45 d'un terminal est généralement utilisée de la manière suivante :
- Quatre fils des huit fils sont séparés en deux paires pour respectivement transmettre et recevoir des données. Le terminal comporte un transformateur ayant un enroulement relié à la paire de réception, et un transformateur ayant un enroulement relié à la paire d'émission, chacun de ces enroulements ayant un point milieu qui peut être relié à un potentiel de référence via une résistance de faible valeur.
- Quatre autres fils, inutilisés, sont mis à la masse, souvent par l'intermédiaire d'une combinaison de résistances et de capacités, pour éliminer les éventuels courants de diaphonie induits par les signaux de données circulant dans les quatre premiers fils, et pour réduire les émissions électromagnétiques indésirables. Si on applique une tension d'alimentation relativement élevée, par exemple 48 Volts, sur cette combinaison de résistances et de capacités, ou sur les résistances reliées aux points milieux des transformateurs, l'intensité du courant circulant dans ces résistances peut les détruire.

On étudie actuellement des procédés pour téléalimenter un terminal dans un réseau local informatique en évitant tout risque de dégât si on branche sur ce réseau un terminal qui n'est pas apte à être téléalimenté par le réseau.

Un tel procédé consiste à :
- produire un signal de test, ou plusieurs signaux de test, sur au moins deux conducteurs d'une liaison destinée à relier le réseau local à un terminal distant, ce signal ayant une énergie telle que le terminal ne peut être endommagé en aucun cas ;
- détecter la présence d'un terminal distant téléalimentable, en détectant la présence d'un circuit d'identification placé dans le terminal distant, en dérivation sur la liaison, à partir du courant créé par le signal ou les signaux de test dans cette liaison ;
- envoyer un courant de téléalimentation dans cette liaison, si et seulement si la présence d'un terminal téléalimentable est détectée.

Un tel procédé évite tout risque pour les terminaux parce que le courant de téléalimentation n'est envoyé qu'après avoir identifié le terminal comme étant téléalimentable. L'intensité et la durée du signal ou des signaux de test sont choisies de manière que l'opération de détection de la présence d'un terminal téléalimentable, **avant** la téléalimentation, ne peut causer aucun dégât dans le cas où le terminal n'est pas un terminal apte à être téléalimenté.

D'autre part, la téléalimentation doit être interrompue sitôt que le terminal est déconnecté de la liaison, car on pourrait en connecter un autre à tout moment. On prévoit donc de détecter continûment la présence d'un terminal **pendant** la téléalimentation, en mesurant l'intensité du courant de téléalimentation. Le dispositif de téléalimentation conclut à une déconnexion s'il détecte que l'intensité du courant consommé est inférieure à une valeur de seuil prédéterminée, pendant un intervalle de temps ayant une durée prédéterminée qui est suffisante pour assurer qu'il y a bien eu déconnexion.

Il n'y a pas encore de norme définissant l'interface entre ces terminaux téléalimentables et un réseau local Ethernet, mais il existe déjà de tels terminaux dans le commerce et dans les réseaux installés. Chaque fabricant utilise sa propre interface ; notamment utilise une impédance différente pour identifier un type de terminal donné, et il utilise des conducteurs différents, parmi les huit conducteurs d'une liaison Ethernet par exemple, pour transporter l'énergie de téléalimentation. Il n'est pratiquement pas possible de modifier des terminaux déjà existants pour les adapter à l'interface utilisée par un autre fabriquant, il n'est donc pas possible actuellement de mélanger dans un même réseau local des terminaux téléalimentables provenant de fabricants différents.

Le but de l'invention est de permettre de mélanger dans un même réseau local des terminaux téléalimentables provenant de fabricants différents.

L'objet de l'invention est un adaptateur de terminal pour relier un terminal à un réseau local informatique capable d'identifier un type de terminal parmi plusieurs types en détectant la présence d'un circuit électronique particulier, dit d'identification, propre à un type, bien que ce terminal ne comprenne pas à l'origine, un tel circuit d'identification ;
**caractérisé** en ce qu'il comporte :
- des premiers moyens de connexion pour insérer cet adaptateur entre deux tronçons d'une liaison entre ce terminal et le réseau ;
- et un circuit d'identification propre à un type de terminal et que ce réseau est capable de détecter ; ce circuit d'identification étant relié à au moins deux conducteurs du tronçon de liaison situé du côté du réseau.

L'ensemble constitué par le terminal plus l'adaptateur ainsi caractérisé est identifié par le réseau comme un terminal du type correspondant à ce circuit d'identification, par exemple du type terminal téléalimentable, parce que le réseau détecte dans l'adaptateur un circuit d'identification propre à ce type de terminal, quel que soit l'interface effectivement utilisée dans ce terminal. Il va de soi que le terminal, dans cet exemple, doit être apte à être téléalimenté.

Selon un mode de réalisation particulier, ce circuit d'identification est relié à au moins deux conducteurs du tronçon de liaison situé du côté du réseau, qui sont chargés de transporter l'énergie de téléalimentation.

Selon un mode de réalisation particulier, l'adaptateur comporte en outre des conducteurs reliant certains conducteurs du tronçon de liaison situé du côté du réseau, à certains conducteurs du tronçon de liaison situé du côté du terminal de façon à appliquer une tension de téléalimentation sur les conducteurs appropriés du tronçon de liaison situé du côté terminal.

Selon un mode de réalisation particulier, l'adaptateur comporte en outre des seconds moyens de connexion reliés à certains conducteurs du tronçon de liaison situé du côté du réseau, ces conducteurs fournissant une tension de téléalimentation ; et ces seconds moyens de connections étant aptes à être reliés à une entrée d'alimentation d'un terminal mais étant inaptes à être reliés à une entrée de données d'un terminal.

Cet adaptateur présente l'avantage qu'il n'y aucun risque si on branche sur cet adaptateur l'entrée de données d'un terminal non téléalimentable, puisque les premiers moyens de connexion ne transmettent pas la téléalimentation, et que les seconds moyens de connections sont inaptes à être reliés à une entrée de données d'un terminal.

L'invention sera mieux comprise et d'autres caractéristiques apparaîtront à l'aide de la description ci-dessous et des figures l'accompagnant :
- La figure 1 représente un réseau local relié à un terminal muni d'un exemple de réalisation de l'adaptateur selon l'invention.
- La figure 2 représente un premier exemple de réalisation de l'adaptateur selon l'invention.
- La figure 3 représente un deuxième exemple de réalisation de l'adaptateur selon l'invention.
- La figure 4 représente un troisième exemple de réalisation de l'adaptateur selon l'invention.

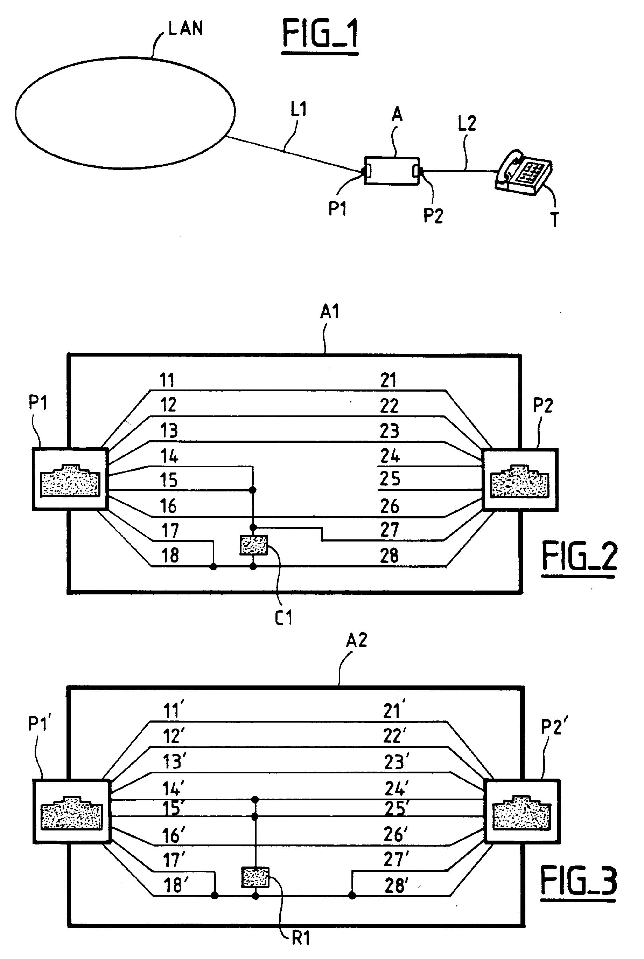

Sur la **figure 1,** cet exemple de réseau local informatique, LAN, est un réseau Ethernet à 100 mégabits par seconde, capable d'identifier deux types de terminal : des terminaux aptes à être téléalimentés, et des terminaux non aptes à être téléalimentés, ces derniers étant seulement alimentables localement par une alimentation secteur. La liaison entre le réseau LAN et le terminal T comprend un tronçon de câble L1 depuis le réseau LAN jusqu'à un adaptateur A, et un tronçon de câble L2 de cet adaptateur A à ce terminal T. Ces deux tronçons de câble comportent chacun huit conducteurs. Ils se terminent tous les deux, du côté de l'adaptateur A, par une prise mâle RJ45 à huit contacts.

La **figure 2** représente un premier exemple A1 de réalisation de l'adaptateur selon l'invention. Il comporte : une prise RJ 45 femelle P1 du côté du réseau et une prise RJ 45 femelle P2 du côté du terminal. A l'intérieur de l'adaptateur A, huit conducteurs 11, ..., 18, reliés à la prise P1, sont interconnectés avec huit conducteurs 21, 22, ....,28 reliés à la prise P2. Ils sont interconnectés de la manière suivante :
11-21 pour la transmission de données.
12-22 pour la transmission de données.
13-23 pour la transmission de données.
14-15-27 pour un pôle de la téléalimentation.
16-26 pour la transmission de données.
17-18-28 pour l'autre pôle de la téléalimentation.

L'adaptateur A comprend en outre un circuit d'identification C1 qui a une borne reliée aux conducteurs 14-15-27, et une autre borne reliée aux conducteurs 17-18-28. Ce circuit d'identification C1 est par exemple une capacité identifiant le type « terminal téléalimentable », selon les spécification de l'interface par un premier fabriquant.

Si l'adaptateur était parfaitement transparent, les liaisons auraient été :
11-21
12-22
13-23
14-24
15-25
16-26
17-27
18-28

Dans ce premier exemple, les conducteurs 14-15 d'une part, et 17-18 d'autre part, constituent le circuit de téléalimentation du côté du réseau. L'adaptateur A1 permet au réseau LAN de détecter le circuit d'identification C1 branché entre les deux pôles de la téléalimentation, pendant le test d'identification d'un terminal branché sur la liaison, alors que le terminal T n'a pas de circuit d'identification, ou bien a un circuit d'identification différent, correspondant aux spécifications d'un autre fabricant par exemple.

Du côté du terminal T, la téléalimentation est appliquée sur les conducteurs 27 et 28, au lieu des conducteurs 24-25 et 27-28 respectivement. L'adaptateur A1 adapte donc la téléalimentation et transmettant l'énergie vers les conducteurs adéquats pour que cette énergie soit utilisée dans le terminal T. En outre, cette énergie électrique est appliquée avec la polarité convenable.

La **figure 3** représente un second exemple de réalisation de l'adaptateur selon l'invention. Il comporte une prise RJ 45 femelle P1' du côté du réseau et une prise RJ 45 femelle P2' du côté du terminal. A l'intérieur de l'adaptateur A2, huit conducteurs 11', ..., 18', reliés à la prise P1', sont interconnectés avec huit conducteurs 21', ....,28' reliés à la prise P2'. Ils sont interconnectés de la manière suivante :
11'-21' pour la transmission de données.
12'-22' pour la transmission de données.
13'-23' pour la transmission de données.
14'-24'-15'-25' pour un pôle de la téléalimentation.
16'-26' pour la transmission de données.
17'-18'-27'-28' pour l'autre pôle de la téléalimentation.

L'adaptateur A2 comprend en outre un circuit d'identification R1 qui a une borne reliée aux conducteurs14'-24'-15'-25', et une autre borne reliée aux conducteurs 17'-18'-27'-28'. Ce circuit d'identification R1 est une résistance identifiant le type « terminal téléalimentable », pour le réseau local considéré. Dans ce second exemple de réalisation, A2, les deux pôles de la téléalimentation sont transmis de manière transparente.

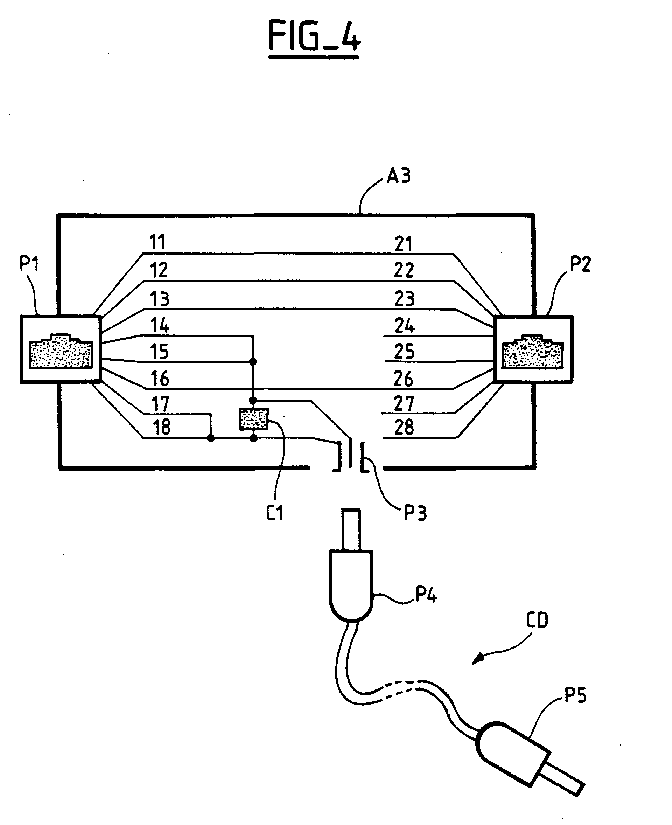

La **figure 4** représente un troisième exemple de réalisation de l'adaptateur selon l'invention, qui est une variante du premier exemple de réalisation. Il est destiné aux terminaux qui sont alimentables par un bloc d'alimentation secteur, externe, fournissant une tension continue de 48 V par exemple ; ou qui sont alimentable selon deux modes : par un bloc externe et par la liaison Ethernet. Un tel bloc comporte un cordon terminé par une prise mâle enfichable dans une prise femelle située sur le terminal.

Cet adaptateur A3 diffère de l'adaptateur A1 par le fait que la téléglimentation n'est pas transmise par la prise RJ45 P2, mais par une prise femelle P3 indépendante de cette prise P2. Cette prise P3 n'est pas de type RJ45, mais une prise à deux contacts, coaxiaux par exemple, reliés respectivement aux conducteurs 14-15 d'une part, et 17-18 d'autre part pour recevoir la téléalimentation fournie par la liaison Ethernet à la prise P1. Les conducteurs 27 et 28 reliés à la prise P2 restent inutilisés.

Pour alimenter un terminal, on doit utiliser un cordon CD en plus d'un câble Ethernet relié à la prise P2. Ce cordon CD comporte une prise mâle P4 enfichable dans la prise P3 de l'adaptateur A3, et il comporte à son autre extrémité une prise mâle P5 enfichable dans une prise d'entrée d'alimentation du terminal.

Cet adaptateur présente l'avantage, par rapport à l'adaptateur A1, qu'il n'y aucun risque si on branche sur la prise P2 un terminal non téléalimentable, puisque celle-ci ne transmet pas la téléalimentation.

La portée de l'invention n'est pas limitée aux deux types de terminaux mentionnés ci-dessus, ni aux réseaux de type Ethernet 100 ou 10 Mb/s. Un adaptateur selon l'invention peut être réalisé pour tout terminal relié par une liaison filaire à un réseau local informatique capable d'identifier un type de terminal parmi plusieurs types en détectant la présence d'un circuit électronique dans ce terminal.

## Revendications

1. Adaptateur de terminal pour relier un terminal à un réseau local informatique capable d'identifier un type de terminal parmi plusieurs types en détectant la présence d'un circuit électronique particulier, dit d'identification, propre à un type, bien que ce terminal ne comprenne pas à l'origine, un tel circuit d'identification ;
**caractérisé en ce qu'**il comporte :
- des premiers moyens de connexion (P1, P2) pour insérer cet adaptateur entre deux tronçons (L1, L2) d'une liaison entre ce terminal (T) et le réseau (LAN);
- et un circuit d'identification (C1 ; R1) propre à un type de terminal et que ce réseau est capable de détecter ; ce circuit d'identification étant relié à au moins deux conducteurs du tronçon de liaison (L1) situé du côté du réseau.

2. Adaptateur selon la revendication 1, **caractérisé en ce que** ce circuit d'identification est relié à au moins deux conducteurs (14-15, 17-18) du tronçon de liaison (L1) situé du côté du réseau, qui sont chargés de transporter l'énergie de téléalimentation.

3. Adaptateur selon la revendication 1, **caractérisé en ce qu'**il comporte en outre des conducteurs (11-21,12-22, 13-23, 16-26, 14-27, 15-27,17-28, 18-28) reliant certains conducteurs du tronçon de liaison (L1) situé du côté du réseau (LAN), à certains conducteurs du tronçon de liaison (L2) situé du côté du terminal (T) de façon à appliquer une tension de téléalimentation sur les conducteurs appropriés du tronçon de liaison (L2) situé du côté terminal.

4. Adaptateur selon la revendication 1, **caractérisé en ce qu'**il comporte en outre des seconds moyens de connexion (P3) reliés à certains conducteurs du tronçon de liaison (L1) situé du côté du réseau (LAN), ces conducteurs fournissant une tension de téléalimentation ; et ces seconds moyens de connections (P3) étant aptes à être reliés à une entrée d'alimentation d'un terminal mais étant inaptes à être reliés à une entrée de données d'un terminal.
